(19) **Europäisches Patentamt European Patent Office Office européen des brevets**

(11) **EP 2 431 084 B1**

(12) **FASCICULE DE BREVET EUROPEEN**

(45) Date de publication et mention
de la délivrance du brevet:
**19.02.2014 Bulletin 2014/08**

(51) Int Cl.:
***A63H 27/133*** *(2006.01)*

(21) Numéro de dépôt: **11180947.1**

(22) Date de dépôt: **12.09.2011**

(54) **Procédé de pilotage d'un drone à voilure tournante à rotors multiples**

Verfahren zum Steuern einer Drohne mit schwenkbarer Tragfläche und mehreren Rotoren

Method for piloting a rotary-wing drone with multiple rotors

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.09.2010 FR 1057369**

(43) Date de publication de la demande:
**21.03.2012 Bulletin 2012/12**

(73) Titulaire: **Parrot**
**75010 Paris (FR)**

(72) Inventeur: **Callou, François**
**75009 PARIS (FR)**

(74) Mandataire: **Dupuis-Latour, Dominique et al Bardehle Pagenberg**
**10, boulevard Haussmann**
**75009 Paris (FR)**

(56) Documents cités:
**WO-A2-2010/061099      US-A1- 2004 245 378**

**Description**

L'invention concerne le pilotage des drones à voilure tournante tels que les quadricoptères et analogues.

Ces drones sont pourvus de rotors multiples entraînés par des moteurs respectifs commandables de manière différenciée afin de piloter le drone en attitude et en vitesse.

Un exemple typique d'un tel drone est le *AR.Drone* de Parrot SA, Paris, France, qui est un quadricoptère équipé d'une série de capteurs (accéléromètres, gyromètres trois axes, altimètre). Le drone est également pourvu d'une caméra frontale captant une image de la scène vers laquelle est dirigé le drone, ainsi que d'une caméra de visée verticale captant une image du terrain survolé.

Ce drone est piloté par l'utilisateur au moyen d'un dispositif de télécommande déportée reliée au drone par une liaison radio.

Le WO 2010/061099 A2 (Parrot SA) décrit en particulier un tel drone et son principe de pilotage par l'intermédiaire d'un téléphone ou baladeur multimédia à écran tactile et accéléromètre intégré.

Si les moteurs sont commandés de manière que le drone s'incline ou "plonge" vers le bas (inclinaison suivant un angle de tangage), alors il va progresser vers l'avant avec une vitesse d'autant plus élevée que l'inclinaison sera importante ; inversement s'il se "cabre" dans le sens inverse, sa vitesse va progressivement ralentir puis s'inverser en repartant vers l'arrière. De la même façon, une inclinaison suivant un axe de roulis (le drone penche à droite ou à gauche) va provoquer un déplacement linéaire horizontal du drone vers la gauche ou vers la droite.

De façon générale, par "inclinaison", on entendra l'inclinaison du drone par rapport à un plan horizontal d'un repère terrestre fixe, étant entendu que les deux composantes longitudinale et transversale de la vitesse horizontale et l'inclinaison suivant les deux axes respectifs de tangage et de roulis sont intimement liées.

Le drone est par ailleurs pourvu d'un système de stabilisation automatique qui permet notamment au drone d'atteindre de manière automatique un point d'équilibre et, lorsque ce point d'équilibre est atteint, d'apporter les corrections nécessaires pour maintenir le point fixe, c'est-à-dire par correction des petites variations de translation dues aux effets externes tels que déplacement d'air. Durant cette phase la dérive des capteurs est estimée par *trimming.*

Les capteurs inertiels (accéléromètres et gyromètres) permettent de mesurer avec une certaine précision les vitesses angulaires et les angles d'attitude du drone (angles d'Euler décrivant l'inclinaison du drone par rapport à un repère terrestre absolu). Les signaux qu'ils délivrent peuvent donc être utilisés pour asservir dynamiquement la direction de poussée du drone dans la direction opposée à celle de la perturbation ou dans la direction opposée aux commandes de pilotage envoyées au drone par l'utilisateur.

L'altimètre, qui est un télémètre à ultrasons disposé sous le drone, fournit une mesure de l'altitude qui permet d'asservir la force de poussée afin de stabiliser le drone en hauteur.

En ce qui concerne la vitesse linéaire dans le plan horizontal (vitesse de translation du drone, représentée par les deux composantes orthogonales longitudinale et transversale considérées dans un plan horizontal d'un repère terrestre), celle-ci est évaluée par analyse de l'image fournie par la caméra à visée verticale du drone en combinaison avec les données accélérométriques, grâce à un logiciel qui estime le déplacement d'une image à la suivante de la scène captée par la caméra, et appliquant à ce déplacement estimé un facteur d'échelle fonction de l'altitude mesurée. Divers algorithmes permettent de déterminer en temps réel la vitesse horizontale avec une très bonne précision, aussi bien pour des valeurs proches de la vitesse maximale du drone, de l'ordre de 8 m/s, que pour des valeurs très faibles, autour du point d'équilibre dans une configuration de vol stationnaire (dans cette configuration, les accéléromètres à bas coût utilisés sont généralement trop bruités pour donner une estimation satisfaisante de la vitesse du drone après double intégration du signal, et la mesure de la vitesse par l'intermédiaire de la caméra permet de compenser les erreurs de ces capteurs).

L'invention vise plus particulièrement la transition depuis :

- un état où le drone vole à une vitesse élevée (et donc avec une inclinaison non nulle), ci-après "état de mouvement", défini par les commandes de pilotage envoyées au drone par l'utilisateur, jusqu'à
- un état d'immobilité du drone, ci-après "état de sustentation", où la vitesse horizontale du drone est nulle et son inclinaison également. Dans ce dernier état, la boucle de stabilisation automatique en vol stationnaire est activée pour maintenir cet état de sustentation à vitesse et inclinaison nulles, comme expliqué plus haut.

Une telle transition intervient en particulier lorsque l'utilisateur déclenche le passage d'un mode de pilotage commandé, où le drone évolue en réponse à des commandes appliquées par cet utilisateur au moyen de son appareil de commande, à un mode autopiloté, où le drone évolue sur la base des seules données reçues de ses capteurs, sans intervention de l'utilisateur.

Cette transition, comme expliqué dans le WO 2010/061099 A2 précité, intervient en particulier lorsque l'utilisateur "lâche les commandes", c'est-à-dire relève les doigts de l'écran tactile de son appareil : dans ce cas, par sécurité, le drone est alors automatiquement amené à un état de vol stationnaire.

Pour opérer cette transition, le système de pilotage automatique applique à la boucle de contrôle des moteurs du drone une consigne permettant d'atteindre les valeurs cibles de vitesse et d'inclinaison nulles.

Toutefois, si l'on applique comme consigne à la boucle de contrôle directement cette valeur cible de vitesse nulle et d'inclinaison nulle, on constate que, souvent, le drone atteint l'état de sustentation final en un temps assez long, sur une trajectoire allongée et souvent après un ou plusieurs changements de signe de la vitesse, c'est-à-dire que le drone dépasse le point fixe, revient en arrière, oscille, etc., et ceci avec un temps d'arrêt (temps mis à partir du début de la transition pour atteindre l'état de sustentation final) qui n'est pas optimal, par rapport à une situation où un utilisateur habile contrôlerait lui-même la transition de l'état de mouvement vers l'état de sustentation.

Le but de l'invention est de proposer un procédé permettant de gérer cette transition de façon entièrement automatique et optimale, c'est-à-dire rapidement, sur une trajectoire courte et sans changement de signe de la vitesse ni oscillation du drone, et donc avec un temps minimal pour atteindre l'état de sustentation.

Le procédé de l'invention est, comme exposé plus haut, un procédé pour opérer une transition depuis : (i) un état de mouvement, à un instant initial, où le drone vole avec une vitesse linéaire horizontale non nulle et une inclinaison par rapport à l'horizontale non nulle, jusqu'à (ii) un état de sustentation, à un instant final, où le drone aura une vitesse linéaire horizontale nulle et une inclinaison nulle.

Il comprend, de manière caractéristique, les étapes consistant à :

a) acquérir des mesures initiales représentatives des composantes de la vitesse linéaire horizontale, des angles d'inclinaison et des vitesses angulaires à l'instant initial ;

b) impartir une valeur de temps d'arrêt entre instant initial et instant final ;

c) à partir des mesures initiales acquises à l'étape a) et du temps d'arrêt imparti à l'étape b), paramétrer une fonction prédictive prédéterminée modélisant une variation continue optimale, décroissante, de la vitesse linaire horizontale en fonction du temps, depuis la vitesse à l'instant initial jusqu'à une vitesse nulle à la fin du temps imparti ;

d) générer des valeurs de consigne d'une boucle (26-40) de contrôle des moteurs (34) du drone, ces valeurs de consigne correspondant à une vitesse linéaire horizontale cible précalculée, à un instant donné, à partir de la fonction prédictive paramétrée à l'étape c) ; et

e) une fois l'état de sustentation atteint, activer une boucle (26-40, 48-58) de commande de vol stationnaire, apte à stabiliser le drone avec une vitesse linéaire horizontale nulle et une inclinaison nulle par rapport au sol.

La fonction prédictive prédéterminée est avantageusement une fonction polynomiale, notamment une fonction polynomiale du quatrième ordre, et l'étape c) de paramétrage de cette fonction est une étape de détermination des coefficients du polynôme.

Plus précisément, cette fonction polynomiale peut être une fonction du type :

$$u(t) = (T - t)^3 * (au * t + bu)$$

$$v(t) = (T - t)^3 * (av * t + bv)$$

*u(t)* étant l'une des composantes de la vitesse horizontale précalculée, v(t) étant l'autre composante de la vitesse horizontale précalculée, T étant la valeur de temps d'arrêt imparti à l'étape b), et *au, bu,* av et bv étant les coefficients du polynôme déterminés à l'étape c).

La valeur de temps d'arrêt imparti à l'étape b) est une valeur qui est de préférence fonction de la vitesse linéaire du drone à l'instant initial, et/ou de la présence ou non d'un carénage de protection placé sur le drone. Elle peut être indépendante de la vitesse verticale du drone.

On va maintenant décrire un exemple de mise en oeuvre du procédé de l'invention, en référence aux dessins annexés où les mêmes références numériques désignent d'une figure à l'autre des éléments identiques ou fonctionnellement semblables.

La Figure 1 est un diagramme d'états illustrant les diverses configurations fonctionnelles entre lesquelles le drone peut évoluer.

La Figure 2 est un schéma par blocs des différents organes de contrôle et d'asservissement ainsi que de pilotage automatique du drone.

La Figure 3 est une caractéristique décrivant, en fonction du temps, la vitesse précalculée par la fonction prédictive selon l'invention.

La Figure 4 illustre le résultat d'essais montrant la valeur de consigne d'angle appliquée à la boucle d'asservissement du drone, l'angle d'inclinaison prédit par le modèle, et l'angle d'inclinaison effectivement mesuré.

La Figure 5 illustre le résultat d'essais montrant la vitesse prédite par le modèle, la vitesse effectivement mesurée, ainsi que l'allure de la courbe de vitesse qui aurait été obtenue en appliquant de façon permanente et dès l'abord une consigne de vitesse nulle.

On décrira l'exemple de mise en oeuvre de l'invention dans le cadre du pilotage d'un quadricoptère tel que le modèle *AR.Drone* de Parrot S.A., Paris, France, décrit notamment dans le WO 2010/061099 A2 précité, ainsi que dans le WO 2009/109711 A2 (qui décrit un exemple de système de stabilisation automatique à partir des informations fournies par un altimètre et une caméra à visée frontale) et le FR 2 915 569 A1 (qui décrit notamment les gyromètres et accéléromètres utilisés par le drone).

Ce drone comporte quatre rotors coplanaires dont les moteurs sont pilotés indépendamment par un système intégré de navigation et de contrôle d'attitude.

Le drone comporte également une caméra frontale donnant une image de la scène vers laquelle se dirige le drone, ainsi qu'une caméra à visée verticale donnant une image du sol et servant également au calcul de la vitesse de translation horizontale.

Le drone est piloté par un appareil de télécommande distant, qui est un appareil pourvu d'un écran tactile affichant l'image captée par la caméra frontale avec en superposition un certain nombre de symboles permettant l'activation de commandes par simple contact du doigt de l'utilisateur sur l'écran tactile. Cet appareil peut être notamment un appareil multimédia ou un assistant numérique personnel, par exemple un téléphone cellulaire du type *iPhone* ou un baladeur multimédia du type *iPod Touch* (marques déposées de Apple Inc., USA), qui sont des appareils incorporant les divers organes de contrôle nécessaires à la détection des commandes de pilotage et à l'échange bidirectionnel de données avec le drone par liaison sans fil de type réseau local *Wi-Fi* (IEEE 802.11) ou *Bluetooth* (marques déposées).

Le pilotage du drone consiste à faire évoluer celui-ci par :

a) rotation autour d'un axe de tangage, pour le faire avance ou reculer ; et/ou

b) rotation autour d'un axe de roulis, pour le déplacer vers la droite ou vers la gauche ; et/ou

c) rotation autour d'un axe de lacet, pour faire pivoter vers la droite ou vers la gauche l'axe principal du drone, donc la direction de pointage de la caméra frontale et la direction de progression du drone ; et/ou

d) translation vers le bas ou vers le haut par changement du régime des gaz, de manière à respectivement réduire ou augmenter l'altitude du drone.

Lorsque ces commandes de pilotage sont appliquées directement par l'utilisateur à partir de l'appareil de télécommande (pilotage dit en "mode réactif"), les commandes a) et b) de pivotement autour des axes de tangage et de roulis sont obtenues de façon intuitive par inclinaison de l'appareil : par exemple, pour faire avancer le drone il suffit d'incliner l'appareil vers l'avant autour de l'axe, pour le déporter à droite il suffit d'incliner l'appareil autour de l'axe vers la droite, etc.

Les commandes c) et d), quant à elles, résultent d'actions appliquées par contact du doigt de l'utilisateur sur des zones spécifiques correspondantes de l'écran tactile.

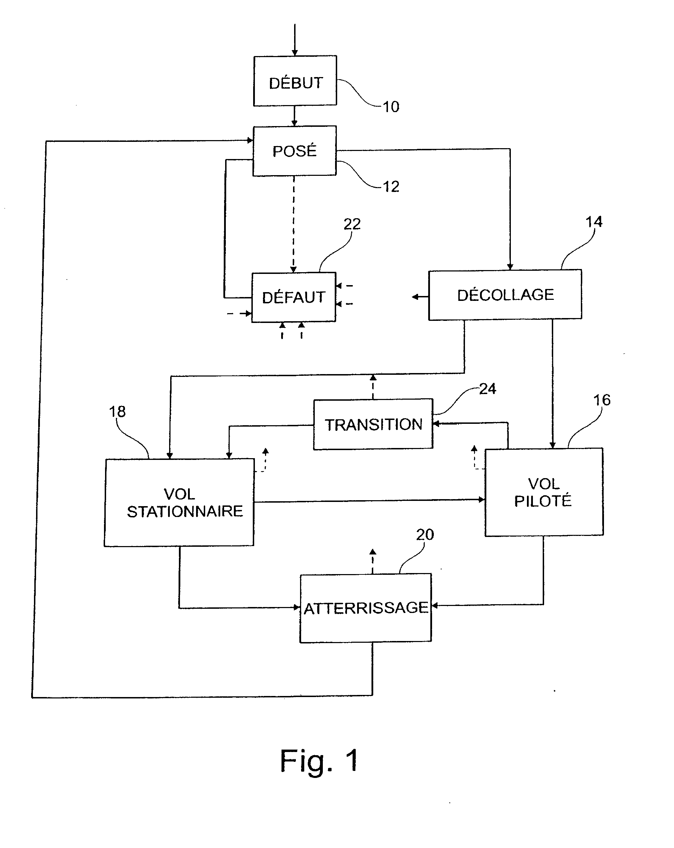

Sur la Figure 1, on a représenté sous forme d'un diagramme d'états les différentes configurations fonctionnelles dans lesquelles peut se trouver le drone.

Juste après l'allumage et un certain nombre d'étapes d'initialisation (bloc 10), le drone se trouve à l'état "posé" (bloc 12), avec les moteurs prêts à démarrer.

L'envoi d'une commande par l'utilisateur provoque le lancement des moteurs et le décollage du drone (bloc 14). Ensuite, deux modes principaux de fonctionnement sont possibles.

Dans un premier mode de pilotage ou "vol piloté" (bloc 16), le pilotage du drone est opéré de façon directe par l'utilisateur, au moyen, comme expliqué plus haut, d'une combinaison :

- d'une part, de signaux émis par le détecteur d'inclinaison de l'appareil : par exemple, pour faire avancer le drone l'utilisateur incline son appareil selon l'axe de tangage correspondant, pour le déporter à droite ou à gauche il incline ce même appareil par rapport à l'axe de roulis ; et

- d'autre part, de commandes disponibles sur l'écran tactile, notamment "montée/descente" (correspondant à une commande des gaz) et "virage à droite/virage à gauche" (pivotement du drone autour d'un axe de lacet).

L'autre mode de pilotage (bloc 18) est un mode automatique mettant en oeuvre le système autonome de stabilisation en vol stationnaire. Ce mode autopiloté est notamment activé :

- à la fin de la phase de décollage,

- dès que l'utilisateur retire son doigt de l'écran tactile de l'appareil, ou
- en cas d'interruption de la liaison radio entre l'appareil et le drone.

Le vol, piloté ou stationnaire, prend fin par passage à un état d'atterrissage (bloc 20), suite à l'appui sur une commande spécifique de l'appareil ou en cas de batterie faible. Le passage à cet état produit une réduction du régime des rotations des moteurs et une diminution corrélative de l'altitude. Lorsque le contact avec le sol a été détecté, l'état est à nouveau l'état "posé" du bloc 12.

Il est également prévu un état de défaut (bloc 22) qui correspond à un état d'urgence en cas d'anomalie détectée, provoquant un arrêt immédiat des moteurs. Cet état de défaut peut être atteint à partir de n'importe lequel des états précédemment décrits, notamment en cas de défaut moteur (blocage d'un rotor), d'anomalie logicielle ou à la suite d'un choc détecté par l'accéléromètre.

L'invention concerne plus précisément la transition (bloc 24) du vol piloté (état de mouvement, bloc 16) au vol stationnaire (état de sustentation, bloc 18) : il s'agit de gérer cette transition de manière progressive pour permettre au drone de passer de l'état de mouvement, où il se déplace avec une inclinaison non nulle et donc une vitesse horizontale qui peut être relativement élevée, jusqu'à l'état de sustentation où il sera immobile et maintenu dans cette position fixe par le système de pilotage automatique et de stabilisation, ceci en un temps minimal et sans inversion de vitesse horizontale.

L'invention propose à cet effet de précalculer des commandes optimales et d'appliquer pendant toute la phase de transition des consignes appropriées correspondantes au système de pilotage automatique.

En effet, lorsque l'utilisateur lâche les commandes pour déclencher le passage du vol piloté au vol stationnaire, l'application immédiate d'une commande de vitesse nulle n'est pas optimale pour l'arrêt du drone, comme on l'a expliqué plus haut.

À partir des états initiaux du drone (vitesse horizontale et angles d'inclinaison), on va calculer la commande d'angle optimale pour annuler la vitesse et l'inclinaison du drone en un temps minimal. Pour cela, le comportement du drone aura été préalablement identifié par une fonction de transfert représentant la réponse angulaire réelle du drone à une consigne ; il sera ainsi possible de prédire son comportement et d'appliquer la consigne angulaire optimale pour l'arrêter en un temps minimum.

De plus, la planification de la transition du vol piloté au vol stationnaire assure qu'il n'y aura pas de dépassement de la consigne, c'est-à-dire que le drone atteindra la vitesse nulle sans que sa vitesse ne change de signe, c'est-à-dire que dans sa procédure d'arrêt le drone se déplacera toujours dans le même sens et ne reviendra pas en arrière.

On notera que cette planification de la transition du vol piloté vers le vol stationnaire agit sur les composantes de la vitesse horizontale linéaire du drone, de façon indépendante de la vitesse verticale (qui peut être nulle ou bien modifiée par l'utilisateur).

On notera également que la transition inverse, du vol stationnaire (bloc 18) vers le vol piloté (bloc 16) ne pose pas de difficulté particulière dans la mesure où l'état initial est un état de vitesse et d'inclinaison nulles et qu'il suffit d'appliquer comme valeur de consigne de vitesse ou d'inclinaison les valeurs cibles définies par les commandes appliquées par l'utilisateur.

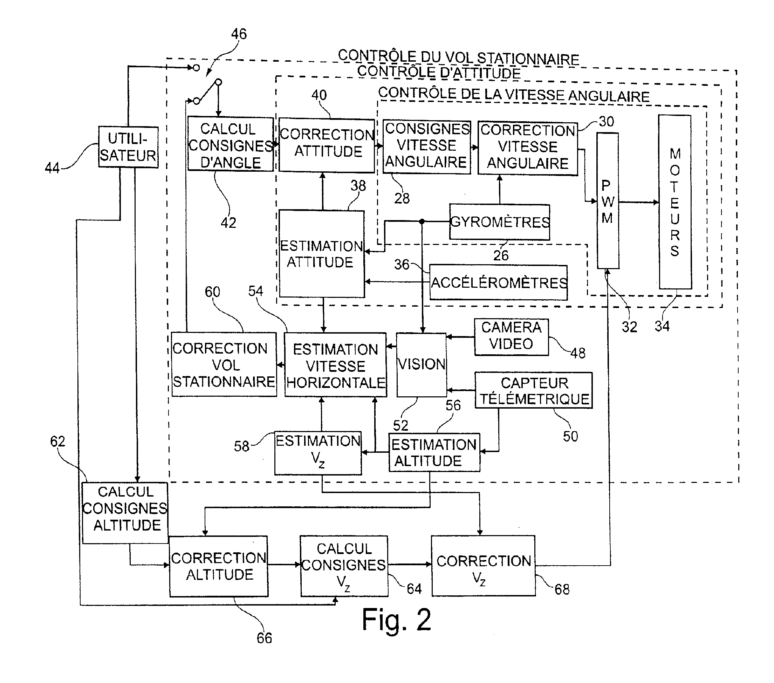

La Figure 2 est un schéma par blocs fonctionnels des différents organes de contrôle et d'asservissement ainsi que de pilotage automatique du drone. On notera toutefois que, bien que ce schéma soit présenté sous forme de circuits interconnectés, la mise en oeuvre des différentes fonctions est essentiellement logicielle, et cette représentation n'a qu'un caractère illustratif.

Le système de pilotage implique plusieurs boucles imbriquées pour le contrôle de la vitesse angulaire, de l'attitude du drone et pour la stabilisation du vol stationnaire, en plus du contrôle des variations d'altitude automatiquement ou sous l'effet d'une commande de l'utilisateur.

La boucle la plus centrale, qui est la boucle de contrôle de la vitesse angulaire, utilise d'une part les signaux fournis par des gyromètres 26, et d'autre part une référence constituée par des consignes de vitesse angulaire 28, ces différentes informations étant appliquées en entrée d'un étage 30 de correction de la vitesse angulaire. Cet étage 30 pilote un étage 32 de contrôle des moteurs 34, notamment par une technique de modulation de largeur d'impulsions (PWM), afin de commander séparément le régime des différents moteurs pour corriger la vitesse angulaire du drone par l'action combinée des rotors entraînés par ces moteurs.

La boucle de contrôle de la vitesse angulaire est imbriquée dans une boucle de contrôle d'attitude, qui opère à partir des indications fournies par les gyromètres 26 et des accéléromètres 36, ces données étant appliquées en entrée à un étage d'estimation d'attitude 38 dont la sortie est appliquée à un étage 40 de correction d'attitude de type PI (Proportionnel-Intégrateur). L'étage 40 délivre en sortie à l'étage 28, des consignes de vitesse angulaire, également à partir de consignes d'angle générées par un circuit 42, soit à partir de données générées en interne par le pilote automatique du drone lorsque celui-ci est dans un état de vol stationnaire (bloc 18 de la Figure 1) ou dans un état de transition entre vol piloté et vol stationnaire (bloc 24), soit de commandes directement appliquée par l'utilisateur 44, dans le cas où le drone est en configuration de vol piloté (bloc 16 de la Figure 1), la sélection de l'une ou l'autre de ces possibilités étant schématisée par le commutateur 46.

En résumé, à partir de l'erreur entre la consigne (appliquée par l'utilisateur ou bien générée en interne dans le cas d'un pilotage automatique) et la mesure de l'angle donnée par le circuit d'estimation d'attitude 38, la boucle de contrôle d'attitude (circuits 26 à 40) calcule une consigne en vitesse angulaire à l'aide du correcteur PI du circuit 40. La boucle de contrôle de la vitesse angulaire (circuits 26 à 34) calcule ensuite la différence entre la consigne de vitesse angulaire précédente et la vitesse angulaire effectivement mesurée par les gyromètres 26, et la boucle calcule à partir de ces informations les consignes de vitesse de rotation (et donc de force ascensionnelle) envoyées aux différents moteurs du drone pour réaliser la manoeuvre initialement demandée par l'utilisateur, ou bien planifiée par le pilote automatique.

La boucle de contrôle d'attitude est elle-même imbriquée dans une boucle de contrôle du vol stationnaire pour le fonctionnement en mode autopiloté, où les consignes appliquées par l'utilisateur sont remplacées par des signaux générés en interne. La caméra vidéo verticale 48 et le capteur télémétrique 50 faisant fonction d'altimètre produisent des informations appliquées à un circuit de traitement 52 recevant également les données issues des gyromètres 28 pour appliquer les corrections nécessaires à l'estimation de la vitesse horizontale, calculée par le circuit 54. Cette estimation de la vitesse horizontale peut être corrigée par une estimation de la vitesse verticale, donnée par le circuit 58 à partir d'une estimation d'altitude fournie par le circuit 52 recevant l'information du capteur télémétrique 50.

La vitesse horizontale estimée par le circuit 54 permet le calcul par le circuit 60 de consignes de vitesse, de la manière exposée ci-après, consignes qui seront ensuite appliquées en entrée de la boucle de contrôle d'attitude après transformation en consignes d'angle par le circuit 42.

En résumé, lorsque le pilote automatique est activé, les consignes envoyées directement par l'utilisateur 44 sont remplacées par des consignes générées en interne par la boucle de contrôle du vol stationnaire (circuits 28 à 60), qui calcule des consignes envoyées à la boucle de contrôle d'attitude (circuits 28 à 34) pour amener le drone à une vitesse nulle ou maintenir celui-ci à une configuration avec vitesse et inclinaison nulles.

En ce qui concerne les déplacements verticaux du drone, l'utilisateur 44 applique soit une consigne de vitesse ascensionnelle ($V_z$), directement appliquée à un circuit 64 , soit une consignes d'altitude appliquée à un circuit 62 qui calcule à partir de l'estimation d'altitude produite par le circuit 56, une consigne de vitesse ascensionnelle au moyen du circuit 66. Dans l'un ou l'autre cas, la vitesse ascensionnelle (prescrite ou calculée) est appliquée à un circuit 68 comparant la vitesse ascensionnelle $V_z$ de consigne avec la vitesse correspondante estimée donnée par le circuit 58, et modifie en conséquence les données de commande des moteurs (circuit 32) de manière à augmenter ou réduire la vitesse de rotation simultanément sur tous les moteurs de façon à minimiser l'écart entre vitesse ascensionnelle de consigne et vitesse ascensionnelle mesurée.

De façon caractéristique de l'invention, dans la situation où le drone est en dans un état de transition (bloc 24 de la Figure 1) intermédiaire entre l'état de vol piloté 16 et l'état de vol stationnaire 18, la consigne de contrôle d'attitude n'est pas une consigne d'attitude nulle (et donc de vitesse nulle), mais une consigne précalculée en fonction du comportement prévisible du drone, de manière à minimiser la transition et minimiser le temps nécessaire pour atteindre l'état de sustentation.

On va maintenant exposer la manière dont sont élaborées les consignes de pilotage des moteurs du drone pendant la phase de transition du vol piloté vers le vol stationnaire.

On désignera par u et v les composantes de la vitesse de translation horizontale (u dans le sens principal de progression du drone et v dans la direction transversale) et par w la vitesse de translation verticale, le tout dans un repère lié au drone (donc indépendant de l'inclinaison de celui-ci par rapport au repère terrestre de référence).

Chacune des quatre hélices i du drone (i = 1 ... 4) exerce un couple $\Gamma i$ et une force de poussée ascensionnelle $F_i$ proportionnelle au carré de la vitesse de rotation $\omega_i$ du moteur :

$$\begin{cases} F_i = a\omega_i^2 \\ \Gamma_i = b\omega_i^2 \end{cases}$$

On applique la relation fondamentale de la dynamique, en projection dans le référentiel mobile du drone, ce qui donne les trois équations suivantes :

$$\dot{u} = (rv - qw) - g\sin\theta - Cxu$$
$$\dot{v} = (pw - ru) + g\sin\varphi\cos\theta + Cyv$$
$$\dot{w} = (qu - pv) + g\cos\varphi\cos\theta - \frac{1}{m}\sum_{i=1}^{4} a\,\omega_i^2$$

(Équations 1-3)

p, q et r étant les vitesses angulaires suivant les trois axes,

g étant l'accélération de la pesanteur,

$\phi$ et $\theta$ étant les deux angles (angle d'Euler) définissant l'inclinaison du drone par rapport à l'horizontale,

$C_x$ et $C_y$ étant les coefficients de résistance à l'avancement (reflétant les forces de frottement subies par le drone) dans les deux axes horizontaux, a étant un coefficient liant la poussée et la vitesse ascensionnelle à la vitesse de rotation $\omega$, et m étant la masse du drone.

On applique de la même façon le théorème du moment dynamique au système, toujours en projection dans le référentiel mobile, ce qui conduit aux trois équations suivantes :

$$I_x\dot{p} + qr(I_z - I_y) = la(\omega_2^2 - \omega_4^2)$$
$$I_y\dot{q} + pr(I_x - I_z) = la(\omega_1^2 - \omega_3^2)$$
$$I_z\dot{r} + pq(I_y - I_x) = b(\omega_1^2 - \omega_2^2 + \omega_3^2 - \omega_4^2)$$

(Équations 4-6)

$I_x$, $I_y$ et $I_z$ étant des paramètres représentatifs du coefficient d'inertie du drone dans les trois axes, et 1 étant la distance séparant le moteur de son centre de gravité.

Dans ces équations, le premier terme du membre de gauche correspond au moment dynamique du système, le second terme représente la contribution au moment dynamique des forces de Coriolis, et le membre de droite correspond aux moments exercés par les forces ascensionnelles $F_i$ et les couples $\Gamma_i$ créés par les hélices de chacun des rotors.

Enfin, on démontre la relation suivante faisant intervenir les trois angles d'Euler $\phi$, $\theta$ et $\psi$ :

$$\dot{\varphi} = p + (q\sin\varphi + r\cos\varphi)\tan\theta$$
$$\dot{\theta} = q\cos\varphi - r\sin\varphi$$
$$\dot{\psi} = \frac{q\sin\varphi + r\cos\varphi}{\cos\theta}$$

(Équations 7-9)

Le comportement du système est donc décrit au total par neuf équations à neuf inconnues.

Au voisinage du point d'équilibre, avec le drone en sustentation à l'horizontale (vitesse et inclinaison nulles), on a :

$$u = v = w = \theta = \varphi = 0$$

Les équations 1-9 deviennent:

$$g = \frac{1}{m} \sum_{1}^{4} a\omega_i^2 \,, \qquad p = q = r = 0, \quad \omega_1 = \omega_3, \quad \omega_2 = \omega_4, \quad \omega_1 = \omega_2$$

Et donc, au voisinage du point d'équilibre :

$$\omega_1 = \omega_2 = \omega_3 = \omega_4 = \frac{1}{2}\sqrt{\frac{mg}{a}} = \omega_0$$

Si l'on pose $w_i = \omega_i - \omega_0$, avec $i = 1... 4$, et que l'on linéarise à l'ordre 1 les équations précédentes 1 à 9 autour du point d'équilibre, on aboutit au système d'équations linéarisées suivant :

$$\begin{cases} \dot{u} = -g(\theta) - Cx * u \\ \dot{v} = g(\varphi) + Cy * v \\ \dot{w} = -\frac{2a\omega_0}{m}(w_1 + w_2 + w_3 + w_4) \\ \dot{p} = \frac{la\omega_0}{I_x}(w_2 - w_4) \\ \dot{q} = \frac{la\omega_0}{I_y}(w_1 - w_3) \\ \dot{r} = \frac{b\omega_0}{I_z}(w_1 + w_3 - w_2 - w_4) \\ \dot{\varphi} = p \\ \dot{\theta} = q \\ \dot{\psi} = r \end{cases}$$

(Équations 10-18)

On obtient ainsi une modélisation du comportement du drone, qui va être utilisée pour prédire son comportement lors de la phase de transition, et à appliquer pendant cette phase.

L'étape suivante consiste à définir la trajectoire optimale durant cette phase.

La phase de transition consiste à passer de l'état $\begin{pmatrix} u \\ \theta \\ q \\ v \\ \varphi \\ p \\ \psi \\ r \end{pmatrix} \neq \vec{0}$ à l'état $\begin{pmatrix} u \\ \theta \\ q \\ v \\ \varphi \\ p \\ \psi \\ r \end{pmatrix} = \vec{0}$ pour atteindre l'état de sustentation en un minimum de temps.

Il s'agit d'annuler progressivement les vitesses u et v, en définissant l'allure d'une trajectoire cible (trajectoire planifiée à partir du modèle), et d'appliquer au pilote automatique des consignes permettant de suivre au plus près cette trajectoire cible.

Suivant chacun des axes le système d'équation possède deux conditions initiales : $u \neq 0$ et $\theta \neq 0$, et deux conditions finales : $u = 0$ et $\theta = 0$ (et de même : $v \neq 0$, $\phi \neq 0$ et $v = 0$, $\phi = 0$).

Il est donc nécessaire d'avoir un polynôme du quatrième ordre pour pouvoir résoudre le système.

On prendra ici un polynôme en $t$ (le paramètre temporel) du quatrième ordre :

$$u(t) = (T - t)^3 * (au * t + bu)$$

$$v(t) = (T - t)^3 * (av * t + bv)$$

(Équations 19-20)

Ces polynômes correspondent à la vitesse cible que l'on veut imprimer au drone, pour atteindre l'état de sustentation en un temps T fixé à l'avance (on verra plus loin la manière dont on peut déterminer ce temps d'arrêt en fonction des conditions de vol à l'instant initial).

Pour connaître le polynôme, il est nécessaire de déterminer les deux couples de coefficients *(au, bu)* et *(av,* bv).

A partir des conditions initiales, on obtient :

$$u(0) = (T)^3 * bu$$

$$v(0) = (T)^3 * bv$$

D'où:

$$bu = \frac{u(0)}{(T)^3}$$

$$bv = \frac{v(0)}{(T)^3}$$

(Équations 21-22)

Et l'on démontre que l'on obtient de la même façon :

$$au = \frac{1}{T^3} * (g * \theta(0) + Cx * u(0) - 3 * \frac{u(0)}{T})$$

$$av = \frac{1}{T^3} * (g * \varphi(0) + Cy * v(0) - 3 * \frac{v(0)}{T})$$

(Équations 23-24)

On peut ainsi paramétrer de façon univoque chacun des polynômes des équations 19 et 20, ce qui permet d'obtenir les deux composantes u ou v de la vitesse horizontale à un instant t quelconque en fonction : du temps T imparti pour l'arrêt, des vitesses initiales u(0) et v(0) et des angles d'inclinaison initiaux $\phi(0)$ et $\theta(0)$.

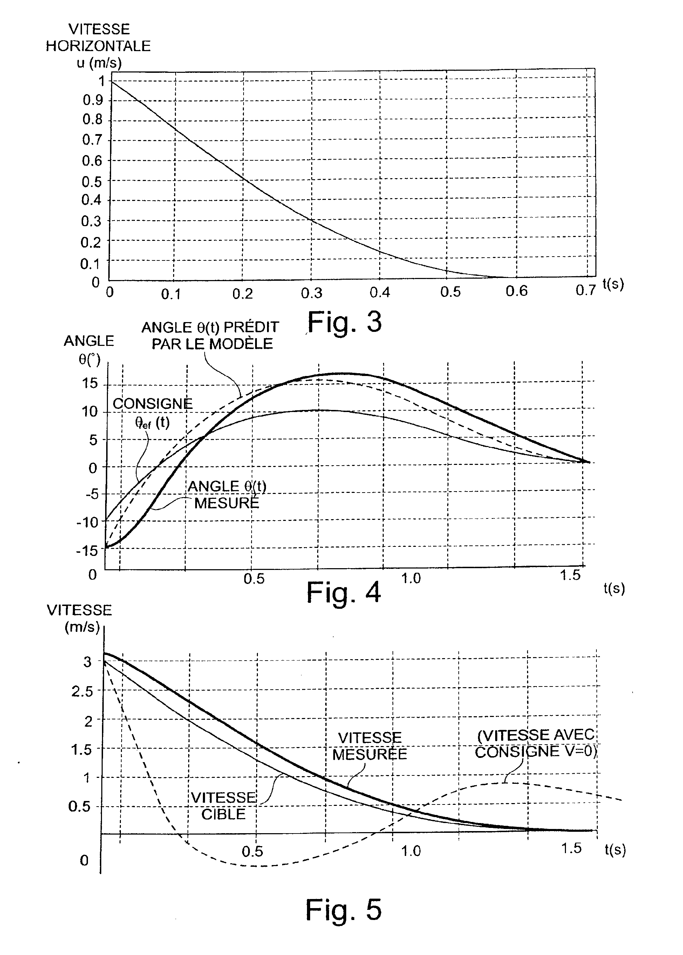

La Figure 3 illustre l'allure de la courbe donnant la composante *u(t)* de la vitesse définie par la relation polynômiale de l'équation 19, avec T = 0, 7 s et pour des conditions initiales u(0) = 1 m/s et θ(0) = 0°, ce qui donne des paramètres calculés *au* = 6,0479 et *bu* = 2,9155.

On notera que la vitesse diminue de façon monotone (donc sans inversion) depuis la vitesse initiale de 1 m/s jusqu'à une vitesse nulle, au bout du temps imparti T = 0,7 s.

On notera également que la pente de la tangente à cette courbe à proximité du point d'arrivée *(T* = 0,7 s) est nulle, ce qui justifie le degré du polynôme.

Une fois déterminée la vitesse horizontale cible, il convient de déterminer les consignes d'angle correspondantes à appliquer à chaque instant t à la boucle de contrôle d'attitude du drone (consigne délivrée en sortie du circuit 42 sur la Figure 2).

On a préalablement identifié la fonction de transfert en angle du drone et on connaît donc son comportement face à une consigne en angle.

Après avoir déterminé *au, av, bu* et bv en fonction des conditions initiales mesurées par les divers capteurs du drone et du temps imparti T, on calcule à chaque instant t les valeurs $u(t), du(t)/dt, d^2u(t)/dt^2$ et $d^3u(t)/dt^3$, et de même $v(t), dv(t)/dt, d^2v(t)/dt^2$ et $d^3v(t)/dt^3$.

Grâce aux fonctions de transfert suivantes :

$$\frac{\theta(p)}{\theta ref(p)} = \frac{75/90}{\frac{p^{\wedge}2}{90} + \frac{12}{90}*p + 1}$$

$$\frac{\varphi(p)}{\varphi ref(p)} = \frac{60/90}{\frac{p^{\wedge}2}{90} + \frac{12}{90}*p + 1}$$

(Équations 25-26)

*p* étant la variable complexe de la transformée dans l'espace de Laplace, on obtient deux équations différentielles qui donnent la valeur de la consigne d'angle à chaque instant :

$$\theta ref(t) = \frac{1}{75} * (\ddot{\theta}(t) + 12 * \dot{\theta}(t) + 90 * \theta(t))$$

$$\varphi ref(t) = \frac{1}{60} * (\ddot{\varphi}(t) + 12 * \dot{\varphi}(t) + 90 * \varphi(t))$$

(Équations 27-28)

Les équations physiques donnent par ailleurs :

$$\dot{u}(t) = -g * \theta - Cx * u(t)$$

$$\Leftrightarrow \theta = -\frac{1}{g}(\dot{u}(t) + Cx * u(t))$$

$$\dot{v}(t) = g * \varphi + Cy * v(t)$$

Les valeurs recherchées de *u(t)* et v(t) sont données par les polynômes des équations 19 et 20 préalablement calculés. Par dérivations successives, on obtient θ(t), θ(t), θ(t) et donc la consigne θ$_{ref}$(t) à appliquer à la boucle de contrôle d'attitude du drone (et de même pour l'angle φ). Cette commande sera la commande optimale pour arrêter le drone dans le temps imparti.

Les Figures 4 et 5 illustrent les résultats d'essais réalisés en vol pour une vitesse initiale de 3 m/s environ, un angle initial de -15° et un temps d'arrêt imparti de 1,5 s.

La Figure 4 illustre les variations de l'angle d'inclinaison θ(*t*) prédit par le modèle, le même angle réellement mesuré (qui se révèle très proche de l'angle prédit), et l'angle de consigne θ$_{ref}$(*t*) à appliquer à la boucle de contrôle d'attitude du drone pour obtenir l'angle prédit par le modèle.

La Figure 5 illustre la variation de la vitesse cible u(t) donnée par la fonction polynômiale, et la vitesse réellement mesurée (qui se révèle très proche de la vitesse cible). Cette figure montre également l'allure de la vitesse que l'on aurait observée si, au lieu d'une vitesse cible régulièrement décroissante, on avait appliqué immédiatement, dès le début de la phase de transition, une consigne de vitesse nulle.

On remarque sur les Figures 4 et 5 que la vitesse aussi bien que l'angle s'annulent sans dépassement à la fin du temps d'arrêt imparti, donc sans changement de signe de la vitesse, c'est-à-dire sans retour en arrière du drone après dépassement du point de sustentation (ce qui se serait produit avec une consigne de vitesse nulle, comme illustré en tiretés sur la

Figure 5).

Le temps d'arrêt imparti est avantageusement un paramètre fonction des conditions de vol du drone à l'instant initial.

On peut notamment choisir un temps d'arrêt fonction de la vitesse initiale du drone : plus la vitesse initiale du drone sera rapide, plus le temps d'arrêt imparti sera long.

De la même façon, le drone est susceptible de voler avec ou sans carénage de protection contre les chocs. Le vol avec carénage rendant les inerties du drone bien plus grandes, ceci nécessitera plus de puissance pour le contrôle ; le temps de réponse global du système étant ralenti, le temps d'arrêt imparti devra être allongé.

On peut par exemple choisir les temps d'arrêt, en fonction de ces deux paramètres selon le tableau suivant :

| Vitesse initiale | Avec carénage | Sans carénage |
|---|---|---|
| $V_0$ < 3m/s | 1,5 s | 0,7 s |
| 3m/s < $V_0$ < 6m/s | 2,2 s | 0,7 s |
| $V_0$ > 6m/s | 2,4 s | 1,5 s |

Ces valeurs ont été obtenues de manière expérimentale, elles assurent un temps d'arrêt optimal tout en gardant une altitude constante.

**Revendications**

1. Un procédé de pilotage d'un drone à voilure tournante à rotors multiples entraînés par des moteurs respectifs commandables de manière différenciée pour piloter le drone en attitude et en vitesse,
   ce procédé étant un procédé pour opérer une transition :

   - depuis un état de mouvement (16), à un instant initial, où le drone vole avec une vitesse linéaire horizontale non nulle et une inclinaison par rapport à l'horizontale non nulle,
   - jusqu'à un état de sustentation (18), à un instant final, où le drone a une vitesse linéaire horizontale nulle et une inclinaison nulle,

   ce procédé étant **caractérisé par** les étapes consistant à :

   a) acquérir des mesures initiales représentatives des composantes de la vitesse linéaire horizontale, des angles d'inclinaison et des vitesses angulaires à l'instant initial ;
   b) impartir une valeur de temps d'arrêt entre instant initial et instant final ;
   c) à partir des mesures initiales acquises à l'étape a) et du temps d'arrêt imparti à l'étape b), paramétrer une fonction prédictive prédéterminée modélisant une variation continue optimale, décroissante, de la vitesse linaire horizontale en fonction du temps, depuis la vitesse à l'instant initial jusqu'à une vitesse nulle à la fin du temps imparti ;
   d) générer des valeurs de consigne d'une boucle (26-40) de contrôle des moteurs (34) du drone, ces valeurs de consigne correspondant à une vitesse linéaire horizontale cible précalculée, à un instant donné, à partir de la fonction prédictive paramétrée à l'étape c) ; et

e) une fois l'état de sustentation atteint, activer une boucle (26-40, 48-58) de commande de vol stationnaire, apte à stabiliser le drone avec une vitesse linéaire horizontale nulle et une inclinaison nulle par rapport au sol.

2. Le procédé de la revendication 1, dans lequel la fonction prédictive prédéterminée est une fonction polynomiale, et l'étape c) de paramétrage de cette fonction est une étape de détermination des coefficients du polynôme.

3. Le procédé de la revendication 2, dans lequel la fonction polynomiale est une fonction polynomiale du quatrième ordre.

4. Le procédé de la revendication 2, dans lequel la fonction polynomiale est une fonction du type :

$$u(t) = (T - t)^3 * (au * t + bu)$$

$$v(t) = (T - t)^3 * (av * t + bv)$$

$u(t)$ étant l'une des composantes de la vitesse linéaire horizontale cible précalculée,
$v(t)$ étant l'autre composante de la vitesse linéaire horizontale cible précalculée,
$T$ étant la valeur de temps d'arrêt imparti à l'étape b), et
$au$, $bu$, $av$ et $bv$ étant les coefficients du polynôme déterminés à l'étape c).

5. Le procédé de la revendication 1, dans lequel la valeur de temps d'arrêt imparti à l'étape b) est une valeur fonction de la vitesse linéaire horizontale du drone à l'instant initial.

6. Le procédé de la revendication 1, dans lequel la valeur de temps d'arrêt imparti à l'étape b) est une valeur fonction de la présence ou non d'un carénage de protection placé sur le drone.

7. Le procédé de la revendication 1, dans lequel la valeur de temps d'arrêt imparti à l'étape b) est une valeur indépendante de la vitesse verticale du drone.

**Patentansprüche**

1. Verfahren zum Steuern einer Drehflügeldrohne mit mehreren Rotoren, die durch jeweilige Motoren angetrieben werden, die auf unterschiedliche Weise ansteuerbar sind, um die Drohne bezüglich Fluglage und Geschwindigkeit zu steuern,
wobei dieses Verfahren ein Verfahren ist, um einen Übergang zu bewirken:

- aus einem Bewegungszustand (16) zu einem Anfangszeitpunkt, wobei die Drohne mit einer von null verschiedenen horizontalen Lineargeschwindigkeit und einer von null verschiedenen Neigung bezüglich der Horizontalen fliegt,
- in einen Schwebezustand (18) zu einem Endzeitpunkt, wobei die Drohne eine horizontale Lineargeschwindigkeit null und eine Neigung null hat,

wobei dieses Verfahren durch die Schritte gekennzeichnet ist, welche aus Folgendem bestehen:

a) Erfassen von Anfangsmesswerten, die für die Komponenten der horizontalen Lineargeschwindigkeit, die Neigungswinkel und die Winkelgeschwindigkeiten zum Anfangszeitpunkt repräsentativ sind;
b) Festsetzen eines Wertes der Anhaltezeit zwischen Anfangszeitpunkt und Endzeitpunkt;
c) ausgehend von den im Schritt a) erfassten Anfangsmesswerten und von der im Schritt b) festgesetzten Anhaltezeit, Parametrieren einer vorbestimmten Vorwärtsregelungsfunktion, welche eine optimale, fallende stetige Änderung der horizontalen Lineargeschwindigkeit in Abhängigkeit von der Zeit von der Geschwindigkeit zum Anfangszeitpunkt bis zu einer Geschwindigkeit null am Ende der festgesetzten Zeit modelliert;
d) Erzeugen von Sollwerten eines Regelkreises (26-40) der Motoren (34) der Drohne, wobei diese Sollwerte einer ausgehend von der im Schritt c) parametrierten Vorwärtsregelungsfunktion vorausberechneten horizontalen Ziel-Lineargeschwindigkeit zu einem gegebenen Zeitpunkt entsprechen; und

e) sobald der Schwebezustand erreicht ist, Aktivieren eines Regelkreises (26-40, 48-58) zur Steuerung eines stationären Fluges, der geeignet ist, die Drohne mit einer horizontalen Lineargeschwindigkeit null und einer Neigung null zum Boden zu stabilisieren.

2. Verfahren nach Anspruch 1, wobei die vorbestimmte Vorwärtsregelungsfunktion eine polynomiale Funktion ist und der Schritt c) der Parametrierung dieser Funktion ein Schritt der Bestimmung der Koeffizienten des Polynoms ist.

3. Verfahren nach Anspruch 2, wobei die polynomiale Funktion eine polynomiale Funktion vierter Ordnung ist.

4. Verfahren nach Anspruch 2, wobei die polynomiale Funktion eine Funktion des Typs

$$u(t) = (T - t)^3 * (au * t + bu)$$

$$v(t) = (T - t)^3 * (av * t + bv)$$

ist,

wobei $u(t)$ eine der Komponenten der vorausberechneten horizontalen Ziel-Lineargeschwindigkeit ist,
$v(t)$ die andere Komponente der vorausberechneten horizontalen Ziel-Lineargeschwindigkeit ist,
$T$ der im Schritt b) festgesetzte Wert der Anhaltezeit ist, und
$au$, $bu$, $av$ und $bv$ die im Schritt c) bestimmten Koeffizienten des Polynoms sind.

5. Verfahren nach Anspruch 1, wobei der im Schritt b) festgesetzte Wert der Anhaltezeit ein Wert ist, der von der horizontalen Lineargeschwindigkeit der Drohne zum Anfangszeitpunkt abhängt.

6. Verfahren nach Anspruch 1, wobei der im Schritt b) festgesetzte Wert der Anhaltezeit ein Wert ist, der vom Vorhandensein oder Nichtvorhandensein einer an der Drohne angebrachten Schutzverkleidung abhängt.

7. Verfahren nach Anspruch 1, wobei der im Schritt b) festgesetzte Wert der Anhaltezeit ein Wert ist, der von der vertikalen Geschwindigkeit der Drohne unabhängig ist.

**Claims**

1. A method for piloting a rotary-wing drone having multiple rotors driven by respective individually-controllable motors for piloting the drone in attitude and speed,
the method being a method for operating a transition:

- from a moving state (16), at an initial instant, in which the drone is flying with a non-zero horizontal linear speed and a non-zero inclination relative to the horizontal,
- to a levitation state (18), at a final instant, in which the drone has a zero horizontal linear speed and a zero inclination,

the method being **characterized by** the steps of:

a) acquiring initial measurements representative of the components of the horizontal linear speed, the angles of inclination and the angular speeds at the initial instant;
b) setting a value of stopping time between the initial instant and the final instant;
c) based on the initial measurements acquired in step a) and on the stopping time set in step b), parameterizing a predetermined predictive function that models an optimum, decreasing, continuous variation of the horizontal linear speed as a function of time, from the speed at the initial instant to a zero speed at the end of the set time;
d) generating set-point values for a loop (26-40) for controlling the motors (34) of the drone, the set-point values corresponding to a precalculated target horizontal linear speed, at a given instant, based on the predictive function as parameterized in step c); and

e) once the levitation state has been reached, activating a loop (26-40, 48-58) for controlling the hovering flight, adapted to stabilize the drone with a zero horizontal linear speed and a zero angle of inclination relative to the ground.

2. The method of claim 1, wherein the predetermined predictive function is a polynomial function, and the step c) of parameterizing the function is a step of determining the coefficients of the polynomial.

3. The method of claim 2, wherein the polynomial function is a fourth order polynomial function.

4. The method of claim 2, wherein the polynomial function is a function of the type:

$$u(t) = (T - t)^3 \ast (au \ast t + bu)$$

$$v(t) = (T - t)^3 \ast (av \ast t + bv)$$

where:

*u(t)* is one of the components of the precalculated target horizontal linear speed,
*v(t)* is the other component of the precalculated target horizontal linear speed,
*T* is the stopping time value set in step b), and
*au, bu, av* and *bv* are the coefficients of the polynomial as determined in step c).

5. The method of claim 1, wherein the stopping time value set in step b) is a value that is a function of the horizontal linear speed of the drone at the initial instant.

6. The method of claim 1, wherein the stopping time value set in step b) is a value that is a function of the presence or not of a protective fairing installed on the drone.

7. The method of claim 1, wherein the stopping time value set in step b) is a value that is independent of the vertical speed of the drone.

Fig. 1

Fig. 2

Fig. 3

Fig. 4

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010061099 A2, Parrot SA
- WO 2009109711 A2
- FR 2915569 A1